# EUROPEAN PATENT APPLICATION

(11) **EP 2 843 604 A1**
(43) Date of publication of application: **04.03.2015**
(21) Application number: 13182456.7
(22) Date of filing: 30.08.2013
(51) Int. Cl.: G06Q 20/32, G06Q 30/02

(54) **A system for collecting, determining the validity of and analyzing transactions**

(71) Applicant: Decorte, Stefaan, 8900 Ieper (BE)
(72) Inventor: Decorte, Stefaan, 8900 Ieper (BE)
(74) Representative: BiiP cvba

(57) **Abstract**

The present invention is directed towards a collecting, determining the validity of, and analyzing transactions, comprising a plurality of electronic devices (1) and a server (2) wherein the electronic devices (1) comprise: means for providing electronic proof of a transaction to the server; wherein the server (2) comprises: means for generating and storing an ID code for every service provider (3) participating, means for receiving transaction data comprising the electronic proof and for determining the validity of the transaction based on the transaction data, means for applying an algorithm on valid transactions, means for sending information comprising an outcome of said algorithm to at least one of the electronic devices (1), characterized in that the means for determining the validity of the transaction does not use participant registration account data.

## Description

### FIELD OF THE INVENTION

The present invention relates to a system for collecting, determining the validity of and analyzing transactions comprising a plurality of electronic devices and a server, wherein said electronic devices comprise means of sending electronic proof of a transaction to the server. Said server further comprises means of determining a valid transaction from a plurality of transactions and applying an algorithm on said valid transactions.

### BACKGROUND OF THE INVENTION

Due to threats and informatic attacks, electronic systems used today for collecting and analyzing data have more and more complex security measures, especially those collecting and analyzing personal data like for example transactions between service providers and participants to a service.

In addition they require a complex communication between the system and each participant and vice-versa, which is burdensome because people are asked to go through a lot of elaborate steps to authenticate themselves or to validate a transaction. These steps require a lot of time and patience from each participant and are not perceived as user-friendly or reliable.

Moreover, different service providers can use different electronic platforms, each with their own security checks and authentication means and each having different modalities of providing feedback to a person. Some of the known systems include different cards used for specific locations or different communication methods using different electronic devices like for example tokens or mobile phones.

Other systems like the ones described in US2011125561 or US2012010930 use different authentication steps and require follow-up on received feedback or a specific selection of the applicable program based on the location of the participant. A first disadvantage of such conventional systems is that they build a very complex participant profile with a lot of details.

A second disadvantage is that the same system having certain technical requirements cannot be used in the premises of different service providers like for example: different service providers from the same service category, different service providers from different service categories, different service providers from different cities, countries or continents.

It is therefore clear considering the above drawbacks that there remains a need for a safe, easy to use and less complex system for collecting, determining the validity of, and analyzing transactions.

It is another object of the present invention to provide a system for collecting, determining the validity of, and analyzing transactions that would be applicable on multiple locations, without the need of a specific selection from the participant upon use.

It is a further object of the present invention to provide a system for collecting, determining the validity of, and analyzing transactions that would not require specific authentication means for different locations.

Further, the present invention provides an up-to-date system for collecting, determining the validity of and analyzing transactions without any allocated time from the participant.

### SUMMARY OF THE INVENTION

The present invention is directed towards a system for collecting, determining the validity of, and analyzing transactions, comprising a plurality of electronic devices and a server, wherein the electronic devices comprise: means for providing electronic proof of a transaction to the server; wherein the server comprises: means for generating and storing an ID code for every service provider participating, means for receiving transaction data comprising the electronic proof and for determining the validity of the transaction based on the transaction data, means for applying an algorithm on valid transactions, means for sending information comprising an outcome of said algorithm to at least one of the electronic devices characterized in that the means for determining the validity of the transaction does not use participant registration account data.

### BRIEF DESCRIPTION OF THE DRAWINGS

FIG 1 schematically represents a system according to the present invention
FIG 2 schematically represents an embodiment according to the present invention
FIG 3 schematically represents an embodiment according to the present invention
FIG 4 schematically represents an embodiment according to the present invention

### DESCRIPTION OF THE INVENTION

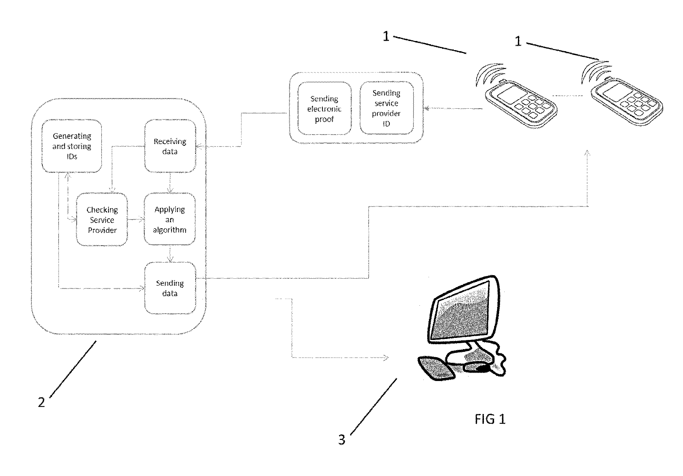

The present invention (FIG 1) is directed towards a system for collecting, determining the validity of, and analyzing transactions, comprising a plurality of electronic devices (1) and a server (2), wherein the electronic devices (1) comprise: means for providing electronic proof of a transaction to the server (2); wherein the server (2) comprises: means for generating and storing an ID code for every service provider (3) participating, means for receiving transaction data comprising the electronic proof and for determining the validity of the transaction based on the transaction data, means for applying an algorithm on valid transactions, means for sending information comprising an outcome of said algorithm to at least one of the electronic devices (1) **characterized in that** the means for determining the validity of the transaction does not use participant registration account data.

In the context of the present invention, a transaction is understood as any kind of exchange of money, goods or information like for example: an acquisition through cash or bank card, an exchange of information on an electronic platform mounted in the premises of a public or private location, an exchange of information on a website, an exchange of goods, an outcome of an auction, a collection of donations, a system controlling the access to and out of a building.

In particular, such transaction is an anonymous exchange.

In the context of the present invention, a service provider (3) is understood as a provider of every kind of service where a transaction as defined above occurs, such as for example: a shop, an individual, a website, a bank, an electronic platform. Because there is no need for participant registration account data to determine the validity of the transaction, a participant is able to use a system in accordance with the present invention without needing to go through a complex communication or authentication process. Furthermore, there is no need to store accounts or any details related to each participant.

A system according to the present invention is also applicable to different service providers (3) from different service categories or from the same service category, from the same city or different cities, countries or continents without the need of additional technical requirements.

Moreover, a system in accordance with the present invention can be implemented on conventional systems, currently present at the service provider's (3) location, whereas the current known systems would need additional technical requirements.

In a further embodiment according to the present invention, the transaction data to determine the validity of the transaction consist of: the service provider ID code where the transaction took place, the value of the transaction and an electronic proof confirming the service provider ID code. Consequently, a participant does not need to spend a significant amount of time before accessing a system in accordance with the present invention, and he will not need to spend a significant amount of time for communicating with the server (2).

In another embodiment according to the present invention said electronic proof can comprise a transaction code, a ticket, a barcode, a QR code or a combination thereof.

In an embodiment according to the present invention, once a service provider (3) agrees to be part of a system according to the present invention, the server (2) will generate a unique identification code. Said unique identification code can be a numeric code, a Quick Response (QR) code, specific character, drawing and/or a combination thereof. The participant can scan it, take a picture of it, introduce it manually in his electronic device, or receive it from the service provider (3) through Bluetooth, Radio Frequency (RF), Infrared or Near Field Communication (NFC). Further, a system according to the present invention comprises means for sending the service provider ID to the server (2).

In another embodiment according to the present invention, the means for sending the service provider ID are part of the service provider's (3) electronic platform. This feature makes the communication with the server (2) much faster and easier for the participant (1).

In a further embodiment according to the present invention said service provider ID can be valid for a limited amount of time and said server (2) can comprise means of connecting to said service provider's (3) platform and sending the new service provider ID periodically.

Preferably, said server (2) comprises a plurality of service providers (3) registered.

In a further embodiment according to the present invention said plurality of service providers (3) can be from the same service category, different service categories, different affiliates and/or different branches.

Optionally, said server (2) can store multimedia content on service providers (3) or touristic places found in different cities, like for example: pictures, videos, historical and/or current event information.

In the context of the present invention an electronic device (1) is to be understood as a fixed or mobile device.

A fixed electronic device is to be understood as any kind of device bounded by a continuous source of electricity like for example: a scanner, a desktop computer, a printer or the like.

A mobile device is to be understood as any kind of device not bounded by a continuous source of electricity like for example and not limiting to: mobile phone, tablet computer, personal digital assistant (PDA), laptop, music player, mp3 player, pager, portable scanner, video game console, electronic reader, slate computer, global positioning system receiver, camera, digital camera, video camera, digital video camera or the like.

In an embodiment according to the present invention said system can use fixed electronic devices, mobile electronic devices or a combination thereof to communicate with the server (2).

In a preferred embodiment according to the present invention, for complete mobility and better accessibility, the electronic devices used are mobile devices.

For a system according to the present invention, said server (2) may further comprise means of sending and/or receiving information to/from the participants and/or service providers (3) through a GSM network, RF network, or more preferably through an internet network.

Moreover, said service provider (3) can have a Wi-Fi hotspot system in place in his premises. With this feature the technical requirements of said mobile devices are even more reduced. Or, said mobile device can connect through one of the different Wi-Fi networks of different internet providers and available in the respective city, or said mobile device can connect through the 3G or 4G network available on his mobile device.

In another embodiment according to the present invention said service provider (3) can have in his premises a fixed electronic device (1) like for example: a scanner or a desktop computer which every participant can use to communicate with the server (2) after a transaction. This makes the system in accordance with the present invention accessible to every participant without the need of an additional device.

In another embodiment according to the present invention, said service provider (3) can offer to the participant a mobile device which he can use to communicate with the server (2).

Because a participant would only have to provide the transaction data to the server (2), a system according to the present invention will encourage the participant to use it whenever he has the chance. Moreover, because the server (2) comprises more than one service provider (3) registered, the participant can have a richer and more varied experience while using a system in accordance with the present invention.

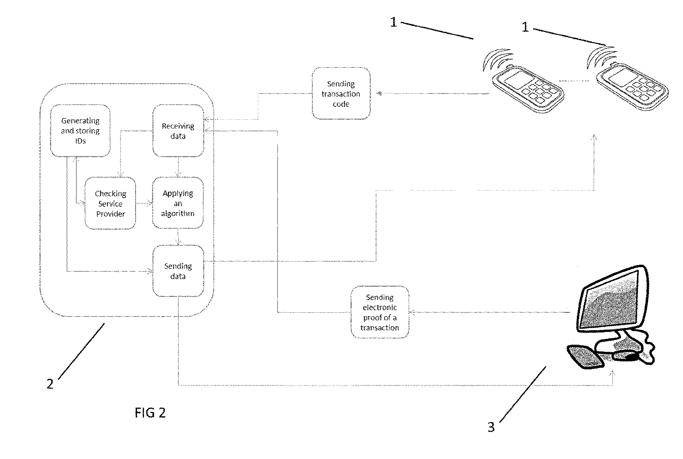

In another embodiment according to the present invention, said service provider's (3) platform can comprise means of sending transaction data to the server (2) (FIG 2). It can further comprise means of sending a transaction code to the participant's electronic device (1), said transaction code corresponding to said transaction. Said participant's electronic device (1) further comprises means of communicating with said server (2) and sending said transaction code. After receiving the data, said server (2) determines if said transaction is valid.

In a further embodiment according to the present invention the information sent by the server (2) can be an SMS, MMS, more preferably said information can be a pop-up that would be visible on at least one of the electronic devices (1). More preferably, said pop-up can be sent to all electronic devices (1) that have sent transactions until that point in time.

In another embodiment according to the present invention, said server (2) comprises means of applying an algorithm on valid transactions.

Such algorithm may be any kind of algorithm used for analyzing transaction data like for example: a statistical algorithm, a rewarding algorithm, a location based algorithm, an amount based algorithm, a time based algorithm or the like. Said rewarding algorithm can be any kind of rewarding algorithm like for example and not limiting to: every valid transaction out of a number of valid transactions that are being sent to the server (2), or every transaction out of a number of valid transactions that are being sent to the server (2) and took place at one or a plurality of the service providers, or every first valid transaction sent within every hour, or every last valid transaction sent within every hour.

In a further embodiment according to the present invention the server (2) comprises means for counting the number of valid transactions to facilitate the implementation of said algorithm.

Furthermore, the outcome of said algorithm can comprise any type of information like for example: rewards such as refunds, prizes, reduction cards or gift cards to use in subscribed service providers (3).

In a further embodiment according to the present invention said algorithm is applied on each service provider (3) individually. Preferably, said algorithm is applied on every service provider (3) within a city, a region, a country, or a continent. More preferably, said algorithm is applied on every registered service provider (3).

Moreover, after the algorithm is applied by the server (2), the results can be stored for further processing. More preferably, said valid transactions are being deleted and said server (2) will reset the number of valid transactions to 0. By applying such a algorithm, less space is needed on the server (2), therefore said system requires less resources.

In a preferred embodiment according to the present invention the server (2) applies said algorithm in real-time. Moreover, said server (2) will communicate in real-time with said participant and will send information on the outcome of the algorithm almost instantaneously. In case of network unavailability or delays, said server (2) comprises means of requesting bank account details from the participant for a later receiving of the reward.

In another embodiment according to the present invention, said server (2) will send a code to said mobile device. The participant can use said code immediately in case he is in close premises of said service provider (3), or he can use said code online for receiving the reward electronically, or he can use said code at a later time when he will return to the service provider (3).

In another embodiment according to the present invention, the server (2) comprises means of connecting to the service provider's (3) platform after each valid transaction corresponding to said service provider (3), means of calculating a percentage from the value of said valid transaction and means of withdrawing said percentage from the service provider's (3) platform. Said percentage can be less than 30%, preferably less than 20%, more preferably less than 10% from the value of the valid transaction.

Furthermore, said server (2) comprises means of determining the value of withdrawn percentage from all valid transactions. If the outcome of the algorithm applied by the server (2) is positive, said server (2) can continue determining the value of withdrawn percentage using the previously determined value, more preferably it will determine the value of withdrawn percentage considering 0 as previous value.

Further, said electronic device (1) can comprise means for sending GPS coordinates. Said GPS coordinates can be sent to the server (2) before or after the transaction. Moreover, said server (2) checks if a service provider (3) is registered based on the GPS coordinates. Therefore, the participant will not need to manually introduce the service provider ID, the server will automatically check if the service provider (3) is registered. This will make the system in accordance with the present invention even faster and easier to use.

In another embodiment according to the present invention said server (2) comprises means of requesting GPS coordinates.

In a preferred embodiment according to the present invention, on the premises of every registered service provider (3), a visual registration indication can be found, like for example: a physical and/or electronic indicator. By having a visual indicator, said participant would be reminded that he can use said system within said location. Therefore said participant would not have to check beforehand a list of registered service providers (3) to have an up-to-date view about said system.

In a preferred embodiment according to the present invention, the service provider ID comprises an identification code, QR, bar code, GPS coordinates and/or a combination thereof corresponding to a service provider (3). Said service provider ID is sent to the server (2) and the server (2) checks if said service provider (3) is registered.

In accordance with the present invention said electronic proof of a transaction comprises a code or a bar code provided by the service provider (3), more preferably said electronic proof comprises a picture or scan of the ticket (also called sales note).

In another embodiment according to the present invention, said server (2) comprises means of interpreting and analyzing transaction data based on the electronic proof of a transaction received. In case such proof of a transaction comprises a scan or a picture of the ticket, the server (2) will implement an optical character recognition procedure and stores the outcome and/or said proof of transaction. This feature will allow further location based analysis and financial reporting facilities without additional technical requirements.

Furthermore said picture or scan of the ticket stands as proof for both: the participant and the service provider (3) in case of later retrieval of the reward. By having the picture or scan of the ticket, the system in accordance with the present invention is safer: in case of a positive outcome of the algorithm, said participant will always receive the reward.

In a preferred embodiment according to the present invention, said server (2) is determining the validity of the transaction, applying an algorithm and is sending information to at least one of the electronic devices (1) in real-time.

In a further embodiment according to the present invention, in case of a positive outcome of said algorithm, said server (2) comprises means of communicating with said service provider's (3) platform and means of electronically confirming the validity of said reward. Further, said service provider (3) can confirm and provide said reward.

In another embodiment according to the present invention, in case the outcome of the algorithm is positive and after said participant receives the reward, said service provider's (3) platform comprises means of communicating with said server (2) and means of receiving the value of the reward.

In another embodiment according to the present invention, said server (2) can comprise means of storing participant accounts. If desired, said participants can provide their personal data and/or a user name and a password. An advantage of creating an account would be a better overview of the visited service providers (3) and of possible outcome of the algorithm within a period of time, or within a certain city. Furthermore, the communication between the server (2) and the mobile device of the participant can be stored on such an account.

Further, a system according to the present invention can be used in a marketing campaign. An advantage of such a use would be promoting a number of registered service providers (3) using the same system, therefore with lower costs and a better chance of success because the participants would be directed towards a variety of locations and products.

Further, a system according to the present invention can be used for promoting a city, or a group of cities. The participants can not only have a varied experience within the premises of the service provider (3) but can also enrich their cultural experience. Moreover, the financial status of a city or group of cities can be easily changed.

### EXAMPLE 1:

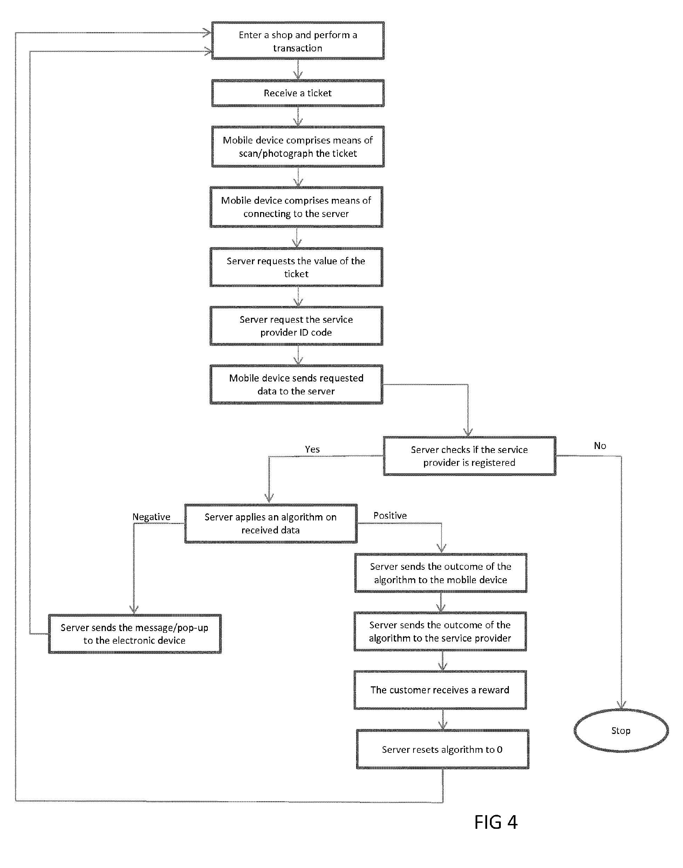

A participant enters in the premises of a service provider (3), performs a transaction and receives a proof of the transaction (FIG 4).

The participant then checks if said service provider is registered though a visual inspection of the premises or by using his smartphone (1) and querying the database of registered service providers. If the outcome is positive, the participant uses his smartphone (1) to scan or take a picture of the proof of the transaction.

Further, the participant queries the service provider (3) and receives the service provider ID. The participant then connects his smartphone (1) to the internet and sends to the server (2) the picture or scan of the proof of the transaction, the value of the transaction and the service provider ID. The server (2) receives the data packet and queries the database of registered service providers using said service provider ID. If the outcome is positive, said transaction is valid. The server (2) applies an incrementing function on valid transactions and stores the current status of said incrementing function.

Furthermore, the server (2) applies an algorithm on the outcome of the incrementing function to check if the valid transaction is the 20th received from all registered service providers (3). The server (2) sends in real-time a data packet to the smartphone (1) comprising the outcome of the algorithm.

If the outcome is negative, the server (2) enters in standby mode until a new packed of transaction data is received. In case the outcome is positive, the server (2) resets the incrementing function to 0 and enters in standby mode until a new packet of transaction data is received.

In case the outcome of the algorithm is positive, the participant receives on the spot the complete refund of the value of the transaction from the service provider (3).

### EXAMPLE 2:

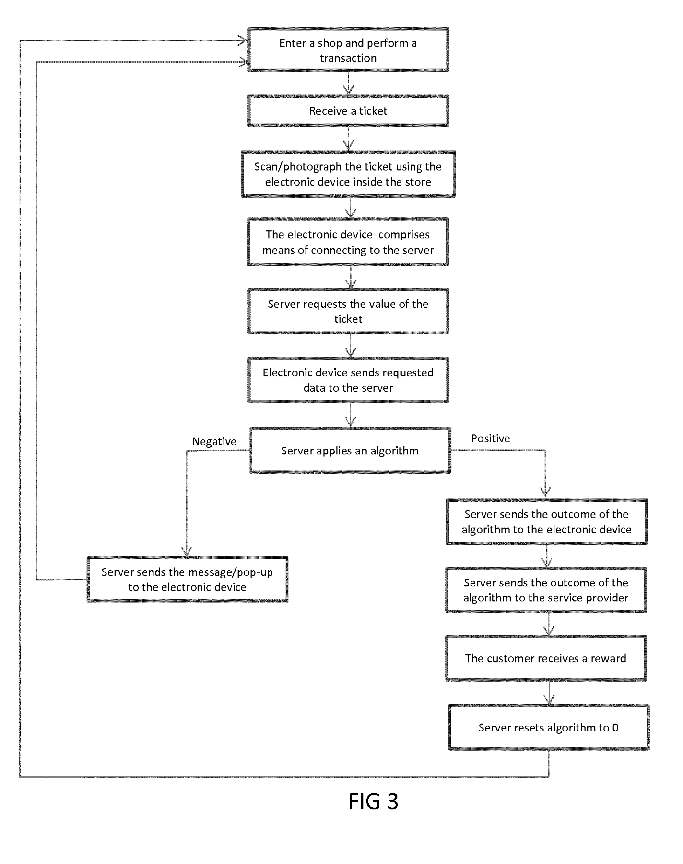

A participant enters in the premises of a service provider (3) and performs a transaction (FIG 3).

The participant then checks if said service provider (3) is registered though a visual inspection of the premises. If the outcome is positive, the participant queries the service provider (3) and receives the service provider ID.

Further, the participant uses a fixed electronic device (1) present in the premises of the service provider (3) to scan or take a picture of the proof of the transaction. The participant then enters the value of the transaction and the service provider ID in the fixed electronic device (1).

Said fixed electronic device (1) uses an internet network to communicate with the server (2). The participant uses said fixed electronic device (1) to send the data packet to the server (2): scan or picture of the proof of the transaction, value of the transaction and service provider ID. The server (2) receives the data and queries the database of registered service providers using said service provider ID. If the outcome is positive, said transaction is valid.

The server (2) further queries the participant for registration data and stores data corresponding to the valid transaction for each registered service provider (3) or for all registered service providers (3). The server (2) further applies an incrementing function on valid transactions and stores the current status of said incrementing function. Furthermore, the server (2) applies an algorithm on the outcome of the incrementing function to check if the valid transaction is the 10^{th} received from the premises of the specific service provider (3).

The server (2) sends in real-time a data packet to the fixed electronic device (1) and/or to any saved communication means: phone number, e-mail address or to a service provider (3) specific online participant account. Said data packet comprises information concerning the outcome of said algorithm. In case the outcome of said algorithm is positive, the participant receives an electronic gift connected to his registration which he can use in real-time or at a later moment of his choice. The server (2) then resets the incrementing function to 0 and enters in standby mode until the next packet data is received. In case said gift, coupon, reduction, or product gift is received at a later moment, said server (2) stores the current status of the customer account, resets the incrementing function to 0 and enters in standby mode until the next data packet is received.

### EXAMPLE 3:

At least a participant is present at an auction and performs a transaction. He receives a proof of said transaction. In the premises, a scanner or any type of fixed electronic device (1) is found. Said electronic device (1) is present only in registered locations and uses an internet network to communicate with the server (2). The participant scans or takes a picture of said proof of the transaction and uses the electronic device (1) to send the proof of the transaction to the server (2). The server (2) applies an OCR (Optical Character Recognition) function and checks if said proof of transaction is valid. If the outcome is positive, said server (2) applies an incrementing function and stores the outcome of said incrementing function.

The server (2) further applies an algorithm on said outcome of the incrementing function and sends in real-time a data packet comprising the outcome of the algorithm back to the electronic device (1). If the outcome of said algorithm is positive, the server (2) resets the algorithm function to 0 and enters in standby mode until the next data packet is received.

The participant receives the data packet comprising the outcome of the algorithm on the electronic device (1) and if the outcome of the algorithm is positive, he will further receive a reward on the spot or later. If the reward is received later, said participant provides personal data to the system present at the location. Said data is stored in the database of said system.

## Claims

1. A system for collecting, determining the validity of, and analyzing transactions,
comprising a plurality of electronic devices (1) and a server (2)
wherein the electronic devices (1) comprise:
- Means for providing electronic proof of a transaction to the server
wherein the server (2) comprises:
- Means for generating and storing an ID code for every service provider (3) participating
- Means for receiving transaction data comprising the electronic proof and for determining the validity of the transaction based on the transaction data
- Means for applying an algorithm on valid transactions
- Means for sending information comprising an outcome of said algorithm to at
least one of the electronic devices (1)
**characterized in that** the means for determining the validity of the transaction
does not use participant registration account data.

2. A system according to claim 1, wherein the electronic devices (1) are mobile devices.

3. A system according to claim 1 wherein the transaction data to determine the validity of the transaction consist of
- The service provider ID code where the transaction took place
- The value of the transaction
- Electronic proof confirming the service provider ID code and the value of the transaction.

4. A system According to claim 3, wherein the electronic proof is a transaction code.

5. A system according to any of the above claims, further comprising means for sending the service provider ID.

6. A system according to claim 5, wherein the means for sending the service provider ID are part of a service provider electronic platform.

7. A system according to claim 2 wherein the mobile device comprises means for sending GPS coordinates.

8. A system according to claim 1 wherein the server (2) comprises means of requesting GPS coordinates.

9. A system according to claim 1 wherein the server (2) comprises means for requesting commercial data corresponding to the transaction.

10. A system according to claim 3 wherein the service provider ID comprises an identification code, QR, bar code, GPS coordinates and/ or a combination thereof.

11. A system according to claim 1 wherein the server comprises means for
counting the number of valid transactions.

12. A system according to claim 1 wherein the server (2) comprises means for
interpreting the commercial data from the electronic proof of a transaction received.

13. A system according to claim 1 wherein the server (2) is determining the validity
of the transaction, applying an algorithm and is sending information to at least one of the electronic devices (1) in real time.
